# EUROPÄISCHE PATENTSCHRIFT

(11) **EP 1 703 137 B1**
(45) Veröffentlichungstag und Bekanntmachung des Hinweises auf die Patenterteilung: **12.05.2010**
(21) Anmeldenummer: 06004799.0
(22) Anmeldetag: 09.03.2006
(51) Int. Cl.: F04D 27/02, F04D 27/00, G01M 13/04

(54) **Ventilator**
Ventilator
Ventilateur

(30) Priorität: 15.03.2005 DE 102005012221
(43) Veröffentlichungstag der Anmeldung: 20.09.2006
(73) Patentinhaber: TLT-Turbo GmbH, 66482 Zweibrücken (DE)
(72) Erfinder: Kraft, Ernst, 36272 Niederaula (DE); Jung, Udo, 36251 Bad Hersfeld (DE); Wahl, Frank, 36341 Lauterbach (DE)
(74) Vertreter: Maier, Daniel Oliver

(56) Entgegenhaltungen:
- WO-A-02/075155
- JP-A- 57 148 100
- JP-A- 61 083 831
- JP-A- 62 029 852

## Beschreibung

Die Erfindung betrifft ein Verfahren zur Überprüfung des Gerätezustandes eines der Entrauchung in Entrauchungsanlagen dienenden Ventilators mit den Merkmalen des Oberbegriffes des Anspruchs 1.

Derartige Ventilatoren werden im baulichen Brandschutz zum Personen-, Sach- und Gebäudeschutz eingesetzt. Sie sollen vornehmlich Flucht- und Rettungswege zur Eigenrettung rauchfrei halten, aber auch zur Erleichterung des Löschangriffs dienen. Als sicherheitsrelevantes Bauteil unterliegen die Entrauchungsventilatoren als Bauprodukt den entsprechenden baurechtlichen Vorschriften. Verantwortlich für die einwandfreie Funktion der Entrauchungsventilatoren und -anlagen sind die Betreiber. Eine regelmäßige technische Funktionsüberprüfung solcher Anlagen ist in bestimmten wiederkehrenden Zeitintervallen baurechtlich vorgeschrieben. Die Wartungsintervalle werden vom Hersteller vorgegeben.

Aus der JP 61 083831 A die als nächstliegender Stand der Tecknich augesehen ist ein Ausfalldiagnose-Verfahren für eine Klimaanlage bekannt, bei dem unter Betriebsbedingungen die elektrischen Werte des Gebläsemotors und die Luftmenge des Gebläses gemessen werden, um eine Fehlfunktion der Klimaanlage aus der Wechselwirkung beider Werte zu klassifizieren. Ein Schwingungsfühler und ein Temperaturfühler, die auf dem Lager des Gebläsemotors montiert sind, wirken mit einem Grenzwertschalter zusammen, der aktiviert wird, wenn ein gemessener Wert einen vorgegebenen Betrag überschreitet.

Die JP 62 029852 betrifft ein Überwachungsverfahren, bei dem innerhalb einer mit einer Wärmepumpe ausgerüsteten Klimaanlage die Lagertemperatur des Kompressors sowie die Raumtemperatur gemessen werden. Nach Maßgabe dieser Messwerte wird die Drehzahl des Kompressors geregelt.

Grundsätzlich werden die Entrauchungsventilatoren in zwei unterschiedlichen Betriebsarten eingesetzt:
- Dauerlüftungsbetrieb und Entrauchungsbetrieb im Brandfall
- Entrauchungsbetrieb im Brandfall.
   Der Betriebsfall des alleinigen Entrauchungsbetriebes stellt hinsichtlich der Frage der Wartungsintervalle und Beurteilung der Betriebssicherheit den schwierigeren der beiden Fälle dar.

Die reinen Entrauchungsventilatoren werden im Laufe ihres Lebenszyklus nur einige wenige Betriebsstunden durch Inbetriebnahmelauf, Funktionstests und Wartungsläufe aufweisen. Die Funktionstüchtigkeit wird bei diesen Ventilatoren im Wesentlichen durch äußere Einflüsse und die spezifischen Alterungserscheinungen der Einzelkomponenten bestimmt. Die Lagerlebensdauer aufgrund der Lagerlaufzeit ist als Ausfallskriterium kaum relevant.

Die geringe Anzahl der geleisteten Betriebsstunden von Entrauchungsventilatoren steht in einem deutlichen Missverhältnis zu dem Aufwand der vorgeschriebenen Wartung.

Der Erfindung liegt die Aufgabe zugrunde, den Aufwand für die Wartung von Ventilatoren zu verringern, die in Entrauchungsanlagen der Entrauchung dienen.

Die Aufgabe wird bei einem gattungsgemäßen Verfahren erfindungsgemäß durch die kennzeichnenden Merkmale des Anspruches 1 gelöst. Vorteilhafte Ausgestaltungen der Erfindung sind Gegenstand der Unteransprüche.

Diagnoseverfahren zur Bestimmung des Gerätezustandes von Ventilatoren sind an sich bekannt. Erfindungsgemäß wird das, Diagnoseverfahren mit dem gesetzlich vorgeschriebenen Funktionslauf, der sich über eine kurze Zeit erstreckt, kombiniert. Da während des Funktionslaufes der Beharrungszustand nicht erreichbar ist, wird aus den zeitlichen Messungen der Temperaturdifferenz zwischen den Parametern Lagertemperatur und Umgebungstemperatur der Temperaturgradient zu einem bestimmten Zeitpunkt ermittelt. Aus den ermittelten Werten wird an Hand von vorgegebenen oder durch Versuche empirisch gewonnenen Alarm- oder Grenzwerten der Schwellwert für ein signal der Alarmgebung festgelegt. Die Auswertung der Messdaten lässt Trendanalysen und Ausfallszeitbeurteilung zu. Durch die mit dem Funktionslauf kombinierte Diagnose wird der für die gesetzlich vorgeschriebene Inbetriebnahmelauf, Funktionstests und Wartungsläufe aufweisen. Die Funktionstüchtigkeit wird bei diesen Ventilatoren im Wesentlichen durch äußere Einflüsse und die spezifischen Alterungserscheinungen der Einzelkomponenten bestimmt. Die Lagerlebensdauer aufgrund der Lagerlaufzeit ist als Ausfallskriterium kaum relevant.

Die geringe Anzahl der geleisteten Betriebsstunden von Entrauchungsventilatoren steht in einem deutlichen Missverhältnis zu dem Aufwand der vorgeschriebenen Wartung.

Der Erfindung liegt die Aufgabe zugrunde, den Aufwand für die Wartung von Ventilatoren zu verringern, die in Entrauchungsanlagen der Entrauchung dienen.

Die Aufgabe wird bei einem gattungsgemäßen Verfahren erfindungsgemäß durch die kennzeichnenden Merkmale des Anspruches 1 gelöst. Vorteilhafte Ausgestaltungen der Erfindung sind Gegenstand der Unteransprüche.

Diagnoseverfahren zur Bestimmung des Gerätezustandes von Ventilatoren sind an sich bekannt. Erfindungsgemäß wird das Diagnoseverfahren mit dem gesetzlich vorgeschriebenen Funktionslauf, der sich über eine kurze Zeit erstreckt, kombiniert. Da während des Funktionslaufes der Beharrungszustand nicht erreichbar ist, wird aus den zeitlichen Messungen der Temperaturdifferenz zwischen den Parametern Lagertemperatur und Umgebungstemperatur der Temperaturgradient zu einem bestimmten Zeitpunkt ermittelt. Aus den ermittelten Werten wird an Hand von vorgegebenen oder durch Versuche empirisch gewonnenen Alarm-oder Grenzwerten der Schwellwert für ein Signal der Alarmgebung festgelegt. Die Auswertung der Messdaten lässt Trendanalysen und Ausfallszeitbeurteilung zu. Durch die mit dem Funktionslauf kombinierte Diagnose wird der für die gesetzlich vorgeschriebene Prüfung von Entrauchungsventilatoren verbundene Aufwand für die zustandsabhängige Wartung reduziert.

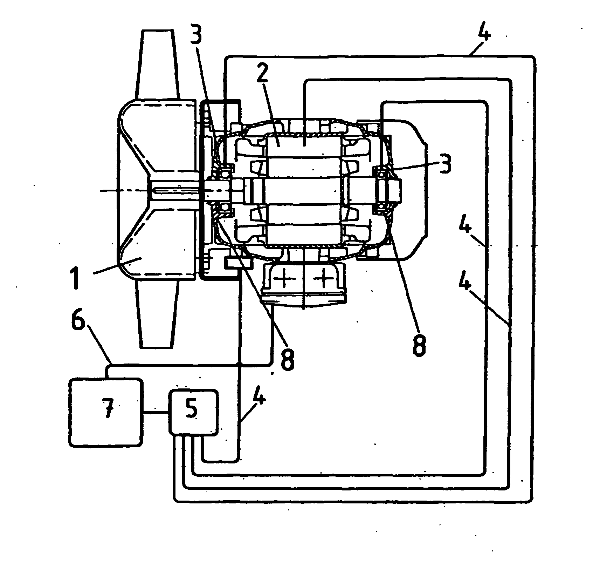

Ein Ausführungsbeispiel der Erfindung ist in der Zeichnung dargestellt und wird im Folgenden näher erläutert. Die Zeichnung zeigt ein Schaltschema zur Durchführung des erfindungsgemäßen Verfahrens.

Ein nur schematisch dargestellter Ventilator 1 ist Teil einer Entrauchungsanlage, z. B. für das Abfertigungsgebäude einer Flughafenanlage. Der Ventilator 1 kann innerhalb einer solchen Entrauchungsanlage ausschließlich der Entrauchung ohne Lüftungsfunktion oder sowohl der Belüftung als auch der Entrauchung dienen. Im Fall der Verwendung des Ventilators sowohl für die Belüftung als auch für die Entrauchung kann die Drehzahl des Ventilators im Lüftungsbetrieb gleich oder ungleich der Drehzahl im Entrauchungsbetrieb sein.

Der Ventilator 1 ist durch einen Elektromotor 2 angetrieben. Der Ventilator 1 und der Elektromotor 2 sind in Lagern 3 gelagert.

In die Lager 3 sind Temperaturmessfühler 8 eingebaut. Ein weiterer, nicht gezeigter Temperaturmessfühler liegt an der Wicklung des Elektromotors 2 an. Ferner sind nicht gezeigte Schwingungsmesser an die Lager 3 und das Gehäuse des Ventilators 1 angelegt.

Wie für die Lager 3 gezeigt, sind die Temperaturmessfühler 8 und die Schwingungsmesser über Signalleitungen 4 mit einem Diagnosegerät 5 verbunden. Die Stromversorgung des Diagnosegerätes 5 erfolgt mit einer Spannungsquelle für den Elektromotor 2 über eine Stromleitung 6, die das Diagnosegerät 5 beispielsweise mit dem Klemmkasten des Elektromotors 2 verbindet. Alternativ hierzu kann eine separate Stromversorgung für das Diagnosegerät erfolgen, wobei die Zuschaltung parallel und gleichzeitig zur Zuschaltung des Entrauchungsventilators im Betriebsfall Entrauchung erfolgen soll.

Das Diagnosegerät 5 wird aktiviert, wenn ein Funktionslauf des Ventilators 1 vorgenommen wird, und bleibt nur so lange aktiv, wie dieser Funktionslauf anhält. Die Mindestfunktionslaufdauer kann beliebig nach den technischen Erfordernissen festgelegt werden. Die Messaufnahme erfolgt direkt nach dem Kaltstart des Ventilators bis zur festgelegten und im Diagnosegerät gespeicherten Mindestfunktionslaufdauer.

Der Funktionslauf soll aus dem kalten Zustand heraus erfolgen. Die Temperaturdifferenz zwischen den Parametern Lagertemperatur, Motortemperatur, Wicklungstemperatur und Umgebungstemperatur soll nur gering sein. Der Funktionslauf, während dessen das Diagnoseverfahren abläuft, wird bei einem reinen Entrauchungsventilator durch ein Einschalten des Ventilators 1 aus dem Ruhezustand automatisch eingeleitet und ist in der Regel beendet, bevor der Ventilator 1 den Beharrungszustand erreicht hat.

Das Einleiten des Funktionslaufs und damit automatisch das Einleiten des Diagnoseverfahrens erfolgt bei einem kombinierten Lüftungs- und Entrauchungsventilator 1 mit gleicher Drehzahl im Lüftungs- und Entrauchungsbetrieb nach einem vorgegebenen Zeitintervall. Bei einem kombinierten Lüftungs- und Entrauchungsventilator 1 mit ungleicher Drehzahl erfolgt das Einleiten des Funktionslaufs ebenfalls automatisch mit dem Umschalten auf die Drehzahl des Entrauchungsbetriebes. Im Falle der ungleichen Drehzahl im Lüftungs- und Entrauchungsbetrieb besteht nur während des Funktionslaufes eine Stromversorgung für das Diagnosegerät 5 mit der Stromversorgung für den Elektromotor 2.

Während des Funktionslaufes werden mit Hilfe des Diagnoseverfahrens die Temperaturen der Lager 3 und der Wicklung sowie die Umgebungstemperatur, die Summenschwingungswerte der Lager 3, der Druck, Frequenzspektren (frequenzabhängige Schwingwerte der Ventilators 1) und optional die Druckdifferenz zu definierten Zeitpunkten über Mittlungsmessverfahren in ihrem zeitlichen Verlauf gemessen. In dem Diagnosegerät 5 oder in einem an das Diagnosegerät 5 angeschlossenen Auslesegerät 7 oder Notebook werden die Messdaten verarbeitet, indem der zeitliche Verlauf der Temperaturmessungen (Umgebung), der Lagertemperatur und der Wicklungstemperatur festgehalten wird. In gleicher Weise werden die übrigen gemessenen Daten verarbeitet.

Mit Hilfe des Diagnoseverfahrens wird die in bestimmten Zeitintervallen vorgeschriebene Prüfung für Entrauchungsventilatoren automatisch bewerkstelligt, so dass ein genaues Bild über die Funktionsweise und den Zustand der Entrauchungsventilatoren gewonnen wird.

## Patentansprüche

1. Verfahren zur Überprüfung des Gerätezustandes eines der Entrauchung in Entrauchungsanlagen dienenden Ventilators mit Hilfe eines Diagnoseverfahrens, bei dem die Temperatur der Lager des Ventilators und des den Ventilator antreibenden Elektromotors gemessen wird, **dadurch gekennzeichnet, dass** das Diagnoseverfahren mit einem Einschalten des Ventilators für einen zeitlich begrenzten Funktionslauf aktiviert wird und dass der sich zeitlich ändernde Verlauf der Temperatur aufgenommen und ausgewertet wird.

2. Verfahren nach Anspruch 1, **dadurch gekennzeichnet, dass** bei Einsatz des Ventilators ausschließlich für den Entrauchungsbetrieb das Diagnoseverfahren mit dem Einschalten des Ventilators aus dem Ruhezustand für einen vor Erreichen des Beharrungszustandes beendeten Funktionslauf aktiviert wird.

3. Verfahren nach Anspruch 1, **dadurch gekennzeichnet, dass** bei Einsatz des Ventilators sowohl für den Belüftungsals auch für den Entrauchungsbetrieb, wobei für einen Funktionslauf aus dem Belüftungsbetrieb in den Entrauchungsbetrieb umgeschaltet wird, das Diagnoseverfahren mit der Umschaltung aktiviert wird.

4. Verfahren nach einem der Ansprüche 1 bis 3, **dadurch gekennzeichnet, dass** zusätzlich die Summenschwingungswerte der Lager erfasst und ausgewertet werden.

5. Verfahren nach einem der Ansprüche 1 bis 4, **dadurch gekennzeichnet, dass** zusätzlich die frequenzabhängigen Schwingwerte des Ventilators erfasst und ausgewertet werden.

6. Verfahren nach einem der Ansprüche 1 bis 5, **dadurch gekennzeichnet, dass** zusätzlich eine Differenzmessung zur Erfassung des durch den Ventilator geförderten Volumenstromes durchgeführt und ausgewertet wird.

## Claims

1. Method for monitoring the device state of a ventilator used to extract smoke from smoke extraction systems with the aid of a diagnostic method, in which the temperature of the bracket of the ventilator and that of the electric motor powering the ventilator is measured, **characterized in that** the diagnostic method is activated for a temporally limited functional run when the ventilator is switched on and that the temporally changing course of the temperature is recorded and evaluated.

2. Method according to claim 1, **characterized in that** exclusive use of the ventilator for smoke extraction operation causes the diagnostic method to be activated out of the idle state for a functional run which terminates before reaching the steady condition state by switching-on the ventilator.

3. Method according to claim 1, **characterized in that** when the ventilator is used for both the ventilation and smoke extraction operation, with a switchover taking place for a functional run from the ventilation operation into the smoke extraction operation, the diagnostic method is activated with said switchover.

4. Method according to one of claims 1 to 3, **characterized in that** the total oscillation values of the bracket are also detected and evaluated. '

5. Method according to one of claims 1 to 4, **characterized in that** the frequency-dependent oscillation values of the ventilator are also detected and evaluated.

6. Method according to one of claims 1 to 5, **characterized in that** a differential measurement for detecting the volume flow conveyed by the ventilator is implemented and evaluated.

## Revendications

1. Procédé de vérification de l'état de fonctionnement d'un ventilateur servant au désenfumage dans des installations de désenfumage, à l'aide d'un procédé de diagnostic, dans lequel la température des supports du ventilateur et du moteur électrique commandant le ventilateur est mesurée, **caractérisé en ce que** le procédé de diagnostic est activé par une mise en marche du ventilateur pour un essai de fonctionnement limité dans le temps et **en ce que** les variations dans le temps de la courbe de température sont enregistrées et analysées.

2. Procédé selon la revendication 1, **caractérisé en ce que**, lorsque le ventilateur est utilisé exclusivement en mode de désenfumage, le procédé de diagnostic est activé par la mise en marche du ventilateur à partir de l'état de repos pour un essai de fonctionnement qui prend fin avant que soit atteint le régime permanent.

3. Procédé selon la revendication 1, **caractérisé en ce que**, lorsque le ventilateur est utilisé aussi bien en mode de ventilation qu'en mode de désenfumage, une commutation ayant lieu pour passer du mode de ventilation en mode de désenfumage pour un essai de fonctionnement, le procédé de diagnostic est activé par la commutation.

4. Procédé selon l'une des revendications 1 à 3, **caractérisé en ce que** l'on saisit et analyse, en plus, les valeurs de vibration cumulées des supports.

5. Procédé selon l'une des revendications 1 à 4, **caractérisé en ce que** l'on saisit et analyse, en plus, les valeurs de vibration du ventilateur en fonction de la fréquence.

6. Procédé selon l'une des revendications 1 à 5, **caractérisé en ce que** l'on exécute, en plus, une mesure différentielle pour déterminer le débit refoulé par le ventilateur et on analyse cette mesure.
